# EUROPEAN PATENT APPLICATION

(11) **EP 3 269 925 A1**
(43) Date of publication of application: **17.01.2018**
(21) Application number: 17175919.4
(22) Date of filing: 14.06.2017
(51) Int. Cl.: F01D 5/04, F01D 9/06, F01D 11/00

(54) **STATIC HUB TRANSITION DUCT**

(30) Priority: 12.07.2016 US 201615208229
(71) Applicant: Rolls-Royce Corporation, Indianapolis, Indiana 46225 (US)
(72) Inventor: Mazur, Steven, Indianapolis, IN Indiana 46204 (US); Whitlock, Mark, Zionsville, IN Indiana 46077 (US); Acker, Jonathan P, Westfield, IN Indiana 46074 (US); Cooper, Nate J, Avon, IN Indiana 46123 (US)
(74) Representative: Rolls-Royce plc

(57) **Abstract**

An engine includes a compressor having a first compressor, a second compressor, and a static hub transition duct. The first compressor includes a rotatable portion and a static portion. The second compressor is disposed downstream of the first compressor and includes an inlet and a rotatable portion. The static hub transition duct includes an inner wall and an outer wall. The inner wall is secured to the static portion of the first compressor, and the inner wall and outer wall define a space that fluidically couples the first compressor and the inlet of the second compressor.

## Description

### FIELD OF DISCLOSURE

The present subject matter relates to gas turbine engines and more particularly, to a hub transition duct used in such engines.

### BACKGROUND

A gas turbine engine, for example, a turbofan jet engine, includes a fan coupled to a shaft. As the fan rotates, ambient air is drawn into the engine through an inlet thereof. A portion of the drawn air passes through a bypass flow path and escapes through an exhaust port of the engine and creates thrust that propels a vehicle. Another portion of the drawn air is directed through one or more compressors that compress and pressurize the air. The compressed air is directed to a combustor in which the compressed air is combined with a fuel and ignited. Such ignition causes combustion of the fuel and the compressed air, and produces rapidly expanding gasses. The gasses pass through a turbine that includes one or more turbine stages coupled to the shaft, and are exhausted through the exhaust port. The gasses rotate the turbine, which then causes the shaft to rotate. Rotation of the shaft rotates the fan to draw in more ambient air into the inlet port of the engine.

The compressor of the engine may include a combination of axial and centrifugal compressors. The airflow through the axial compressor is generally parallel to the shaft coupled to the axial compressor, and the airflow through the centrifugal compressor is generally perpendicular to the shaft. Both types of compressors include rotatable components that are coupled to the shaft.

In some engines, all of the rotatable components of the compressor and the turbine are driven by the same shaft, and rotate at the same speed. Alternately, an engine may include multiple shafts that separately drive the different compressors at different speeds.

In some engines, the air that exits the axial compressor directly enters the centrifugal compressor. In other engines, the air that exits the axial compressor enters a transition duct that guides such air to an input section of centrifugal compressor. If such duct is coupled to a rotating shaft, a thicker boundary region may form between a duct wall and the air proximate to such duct wall. A swirl may increase or pressure losses may occur in such boundary region that undesirably reduces the efficiency of the centrifugal compressor downstream of the axial compressor.

### SUMMARY

According to one aspect, a compressor of an engine includes a first compressor, a second compressor, and a static hub transition duct. The first compressor includes a rotatable portion and a static portion. The second compressor is downstream of the first compressor and includes an inlet and a rotatable portion. The static hub transition duct includes an inner wall and an outer wall, and the inner wall is secured to the static portion of the first compressor. The inner wall and the outer wall define a space that fluidically couples the first compressor and the inlet of the second compressor.

According to an aspect, a compressor of an engine, wherein the engine includes a shaft. The compressor comprises a first compressor. The first compressor includes a first rotatable portion and a static portion. The first rotatable portion is mechanically secured to the shaft. The compressor comprises a second compressor downstream of the first compressor. The second compressor includes a second rotatable portion. The second rotatable portion is mechanically secured to the shaft. The compressor comprises a transition duct having an inner wall and an outer wall. The inner wall is secured to the static portion of the first compressor. The inner wall and outer wall define a space that fluidically couples an exit of the first compressor and an inlet of the second compressor.

According to an aspect, an engine comprising the compressor of one of the previous aspects.

According to another aspect, an engine includes an axial compressor, a centrifugal compressor, a static hub transition duct, and a shaft. The axial compressor includes a plurality of rotors, a plurality of stators, and a final stator. The static hub transition duct fluidically couples the axial compressor and the centrifugal compressor, and includes a wall secured to the final stator. The shaft drives the rotors of the axial compressor and the centrifugal compressor.

The centrifugal compressor may be disposed downstream of the axial compressor. The static transition duct may include a further wall. The wall and the further wall may define a space through which fluid can flow. The space may be free of any supporting structures. The engine may further include a casing that surrounds the axial compressor. A portion of the casing may form at least a portion of one of the wall and the further wall. The engine may comprise a knife seal to prevent air in the static transition duct from bleeding out of the static transition duct toward the final stator. The engine may further include a knife seal to prevent air in the static transition duct from bleeding out of the static transition duct toward the final stator. The axial compressor and the centrifugal compressor may rotate at the same speed.

Other aspects and advantages will become apparent upon consideration of the following detailed description and the attached drawings wherein like numerals designate like structures throughout the specification.

### BRIEF DESCRIPTION OF THE DRAWINGS

FIG. 1 is a cross-sectional view of an exemplary turbofan engine;
FIG. 2 is a cross-sectional fragmentary view of a compressor of the engine of FIG. 1, with a portion of the compressor in side elevational view;
FIG. 3 is an elevational view of a portion of a stator of an axial compressor of the compressor of FIG. 2;
FIG. 4 is a cross-sectional view of an embodiment of a static hub transition duct of the compressor of FIG. 2; and
FIG. 5 is a cross-sectional view of another embodiment of a static hub transition duct of the compressor of FIG. 2.

### DETAILED DESCRIPTION

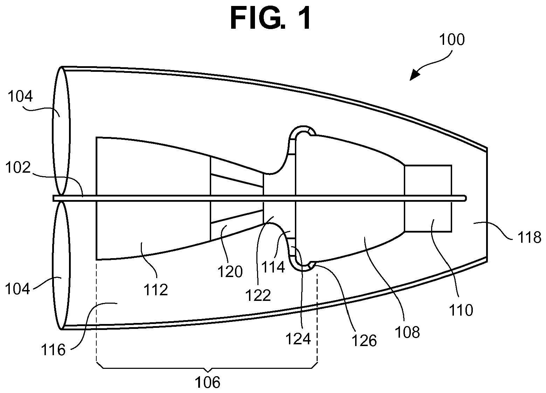

Referring to FIG. 1, an engine 100 includes a shaft 102, a fan 104, a compressor 106, a combustor 108, and a turbine 110. The compressor 106 includes an axial compressor 112 and a centrifugal compressor 114.

The turbine 110 is coupled to the shaft 102 so that rotation of the turbine 110 causes rotation of the shaft 102. In some embodiments, the axial compressor 112 and the centrifugal compressor 114 are all also coupled to and driven by the shaft 102 such that, when the shaft 102 rotates, both compressors 112, 114 rotate at the same speed as the shaft 102 and the turbine 110. In other embodiments, the fan 104, the axial compressor 112, and the centrifugal compressor 114 are coupled to one or more other shafts (not shown), which in turn are driven by the shaft 102. In these embodiments, one or more of the fan 104, the axial compressor 112, and the centrifugal compressor 114 may rotate at speeds different from one another and different than the shaft 102.

When the fan 104 rotates, air is drawn into the engine 100. A portion of the drawn air passes through a bypass flow path 116 to an output port 118 of the engine 100, and thereby generates thrust.

Another portion of the drawn air is directed through the axial compressor 112. An annular transition duct 120 fluidically couples the axial compressor 112 and the centrifugal compressor 114, such that compressed air from the axial compressor 112 passes through the transition duct 120 and into the centrifugal compressor 114.

The centrifugal compressor 114 includes an impeller 122, a diffuser 124, and one or more de-swirl vanes 126. Compressed air enters the impeller 122, passes through the diffuser 124 and the de-swirl vanes 126 and into the combustor 108. The compressed air is combined with a fuel in the combustor 108 and burned to produce rapidly expanding combustion gasses. The combustion gasses pass through and rotate the turbine 110. Because the turbine 110 is coupled to the shaft 102, rotation of the turbine 110 causes rotation of the shaft 102, and thereby rotation of the fan 104 to draw in more air. After passing through the turbine 110, the combustion gasses are exhausted through the output port 118 and provide additional thrust.

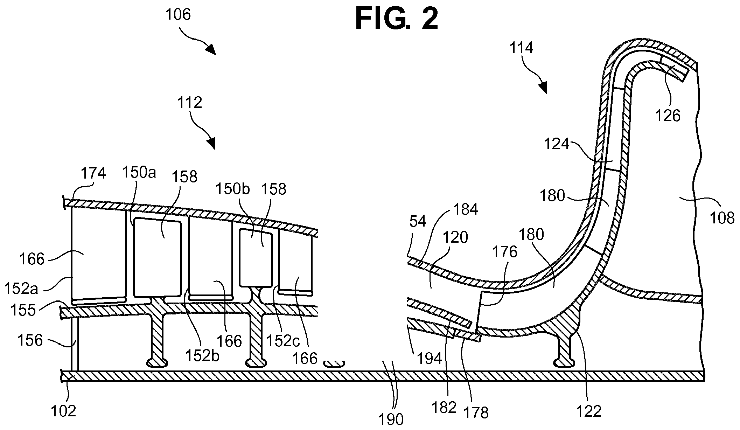

Referring to FIG. 2, the axial compressor 112 includes a plurality of spaced rotors 150a, 150b, and 150c interleaved with a plurality of spaced stators 152a, 152b, and 152c. Although the embodiment of the axial compressor 112 shown in FIG. 2 includes three pairs of rotors and stators, 150 and 152, respectively, other embodiments of the axial compressor 112 may have more or fewer rotors and stators, 150 and 152, respectively. In some embodiments, the number of rotors 150 is identical to the number of stators 152. Alternately, the number of rotors 150 may be different than the number of stators 152.

A final stator 154 is disposed downstream of the final rotor 150c.

Each rotor 150 is mechanically secured to a frame 155, which in turn is mechanically secured to the shaft 102. In some embodiments, an attachment member 156 secures the frame 155 to the shaft 102. As the shaft 102 rotates, the frame 155 and rotors 150 secured thereto rotate about the shaft 102. Each rotor 150 includes a plurality of rotor blades 158 that are shaped and positioned about the frame 155. Any suitable fasteners and/or welds may be used to secure the rotors 150 to the frame 155 and the frame 155 to the shaft 102. In some embodiments, one or more of the rotors 150, the frame 155 (or a portion thereof), and/or the attachment member 156 may be manufactured as integral unit. Further, in some embodiments, instead of being secured to the frame 155, the rotors 150 may be secured to one another to form a combined structure and the attachment member 156 may secure such combined structure to the shaft 102. In some embodiments, a plurality of attachment members 156 may be used to mechanically secure the rotors 150 to the shaft 102, either with or without the frame 155. One or more attachment member(s) 156 that mechanically secure the rotors 150 to the shaft 102 may be disposed upstream of the first rotor 150a, downstream of the last rotor 150c, and/or anywhere intermediate the first rotor 150a and the last rotor 150c. Other ways of mechanically securing the rotors 150 to the shaft 102 apparent to those who have ordinary skill in the art may be used.

Each of the stators 152a, 152b, and 152c, and the final stator 154 is secured to a static part (not shown) of the engine 100 and/or a static casing (described below) that surrounds the axial compressor 112, such that the stators 152 and 154 remain stationary as the rotors 150 rotate.

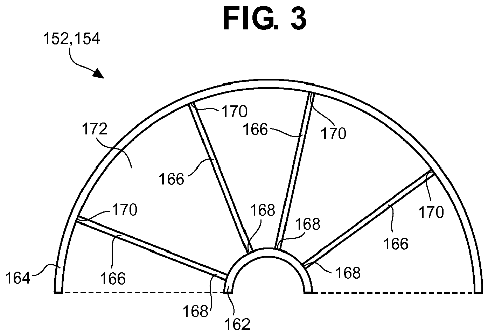

Specifically, referring to FIG. 3, each stator 152 and the final stator 154 includes a generally cylindrical or frustum shaped inner casing 162 concentrically disposed within a generally cylindrical or frustum shaped outer casing 164, and a plurality of stator vanes 166. In particular, a first, radially inner end 168 of each stator vane 166 is secured to the inner casing 162. A second, radially outer end 170 opposite the first end 168 of the stator vane 166 is secured to the outer casing 164 and each vane spans the distance between the inner casing 162 and the outer casing 164. In some embodiments, one or more of the stator vanes 166 are secured only to the outer casing 164 in a cantilevered manner and not secured to the inner casing 162. The stator vanes 166 are circumferentially distributed in the space 172 between the inner casing 162 and the outer casing 164.

Referring once again to FIG. 2, rotation of the rotor 150, and the blades 158 thereof, compresses the air drawn in by the fan 104 and transports the compressed air away from the fan 104 and through the engine 100 along a path substantially parallel to the shaft 102. The stators 152 and the final stator 154 facilitate compression and transport of the air through the axial compressor 112.

An outer casing 174 surrounds the rotors 150, the stators 152, and the final stator 154 to contain the airflow within the axial compressor 112. In some embodiments, the outer casing 174 also surrounds the centrifugal compressor 114, or a portion thereof. In some embodiments, the final stator 154 is secured to the outer casing 174. In other embodiments, the final stator 154 is secured to an attachment member (not shown) that attaches the final stator 154 to the static part (not shown) of the engine 100.

The transition duct 120 is disposed downstream of the final stator 154 of the axial compressor 112. The transition duct 120 directs compressed air from the axial compressor 112 into an inlet 176 of the centrifugal compressor 114. In one embodiment, an attachment member 178 mechanically secures the impeller 122 of the centrifugal compressor 114 to the frame 155, thereby mechanically securing the impeller 122 to the shaft 102. In some embodiments, the impeller 122 may be secured to the shaft 102 by one or more other attachment member(s) (not shown). In other embodiments, if the centrifugal compressor 114 includes other rotatable components, such rotatable components may also be mechanically secured to the shaft 102 by the attachment member 178, or one or more other attachment member(s) (not shown). In some cases, the impeller 122 (or other rotatable component(s)) of the centrifugal compressor 114 may be mechanically secured to the final rotor 150c by the attachment member 178, and thereby mechanically secured to the shaft 102. The centrifugal compressor 114 may comprise a mixed flow compressor in which the exit flow from the centrifugal compressor 114 is not perpendicular to the shaft 102.

The impeller 122 of the centrifugal compressor 114 includes a plurality of blades 180, that when rotated, compress and guide air that enters the inlet 176 radially away from rotating shaft 102 about which the blades 180 rotate. As described above, compressed air from impeller 122 of the centrifugal compressor 114 passes through the diffuser 124, past the de-swirl vanes 126, and into the combustor 108. In some embodiments, the diffuser 124 and the de-swirl vanes 126 are secured to a static portion of the engine 100 by one or more attachment members (not shown) and do not rotate.

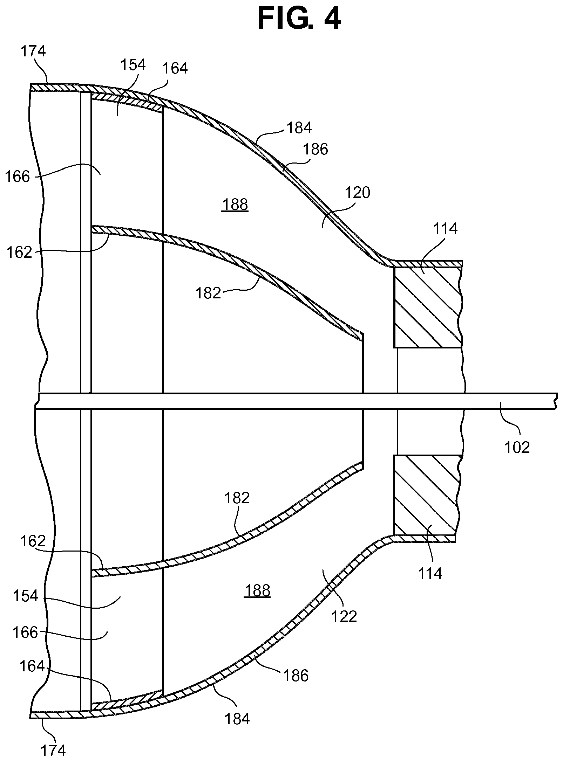

Referring to FIG. 4, the transition duct 120 includes an inner wall or hub 182 that encircles the shaft 102 and remains static when the shaft 102 rotates. The inner wall 182 of the transition duct 120 is secured in a cantilevered fashion to the inner casing 162 of the final stator 154 by any suitable elements, such as by fasteners and/or welds. Alternately, the inner wall 182 and the inner casing 162 may be manufactured as an integral component in which the inner wall 182 extends from the inner casing 162 in a cantilevered fashion.

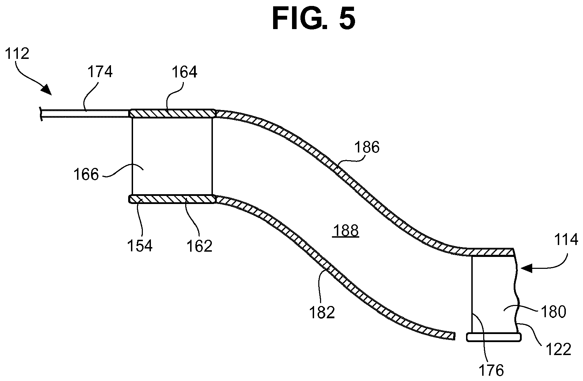

Referring to FIG. 5, in another embodiment, the outer wall 186 of the transition duct 120 is secured in a cantilevered fashion to the outer casing 164 of the final stator 154. In some cases, the outer wall 186 and the outer casing 164 may be manufactured as an integral component in which the outer wall 186 extends from the outer casing 164 in a cantilevered fashion. In still other embodiments, the outer wall 186 is secured to the outer casing 174 of the axial compressor 112. In either case, such securement may be accomplished using any suitable elements, such as fasteners and/or welds. In some embodiments, the outer casing 174 of the axial compressor 112 includes an extended portion 184 that forms an outer wall 186, or a portion thereof, of the transition duct 120.

Other ways of forming the outer wall 186 of the transition duct 120 apparent to those who have skill in the art may be used.

Referring to FIGS. 4 and 5, because the inner wall 182 and the outer wall 186 of the transition duct 120 are secured to stationary parts of the axial compressor 112, the transition duct 120 also remains static during rotation of the rotatable components of the axial compressor 112 and the centrifugal compressor 114. When the engine 100 is operating, the non-rotating, or static, transition duct 120 facilitates formation of a generally thin boundary layer between the airflow in the transition duct 120 and the inner and outer walls, 182 and 186, respectively, thereof compared to a thicker boundary layer that would result if the inner wall or hub 182 of transition duct 120 were rotating. Further, as noted above, in contrast to the transition duct 120 having a static hub 182, air in the boundary layer in a rotating transition duct could increase the swirl in the boundary layer and form disturbances in the airflow that would reduce the efficiency of the centrifugal compressor 114 downstream of the rotating transition duct.

In addition, because the inner casing 162 of the final stator 154 supports the inner wall 182, no additional supporting structures, such as struts, are necessary to secure the inner wall 182 to another stationary portion of the engine 100. Therefore, the interior volume 188 of the transition duct 120 is free of such supporting structures that may interfere with the flow of air therethrough.

Referring once again to FIG. 2, in one embodiment, one or more knife seal(s) 190 may be disposed to prevent bleeding of air from the static portions of the compressor 106 into the rotating portions thereof. One or more knife seal(s) 190 may be disposed at an upstream end 194 of the transition duct 120 to prevent secondary airflow leaking from the duct 120 toward the final stator 154. It should be apparent that other knife seals 190 can be disposed within the compressor 106 as appropriate.

### INDUSTRIAL APPLICABILITY

In summary, a transition duct through which compressed air from an exit of the axial compressor flows into an inlet of the centrifugal compressor that has one or more walls that are static, i.e., do not rotate with rotatable components of such compressors, reduces the probability that disturbances in the airflow through such duct may form that would impact the efficiency of the centrifugal compressor. Further, having a transition duct that does not include supporting structures such as struts therein provides a clear pathway for air to flow therethrough, again reducing the chances of disturbances forming in the airflow through the duct.

All references, including publications, patent applications, and patents, cited herein are hereby incorporated by reference to the same extent as if each reference were individually and specifically indicated to be incorporated by reference and were set forth in its entirety herein.

The use of the terms "a" and "an" and "the" and similar references in the context of describing the invention (especially in the context of the following claims) are to be construed to cover both the singular and the plural, unless otherwise indicated herein or clearly contradicted by context. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the disclosure and does not pose a limitation on the scope of the disclosure unless otherwise claimed. No language in the specification should be construed as indicating any non-claimed element as essential to the practice of the disclosure.

Numerous modifications to the present disclosure will be apparent to those skilled in the art in view of the foregoing description. It should be understood that the illustrated embodiments are exemplary only, and should not be taken as limiting the scope of the disclosure.

## Claims

1. A compressor of an engine, wherein the engine includes a shaft, comprising:
a first compressor, wherein the first compressor includes a first rotatable portion and a static portion, wherein the first rotatable portion is mechanically secured to the shaft;
a second compressor downstream of the first compressor, wherein the second compressor includes a second rotatable portion, wherein the second rotatable portion is mechanically secured to the shaft; and
a transition duct having an inner wall and an outer wall, wherein the inner wall is secured to the static portion of the first compressor, and the inner wall and outer wall define a space that fluidically couples an exit of the first compressor and an inlet of the second compressor.

2. The compressor of claim 1, wherein the first compressor is an axial compressor and the second compressor is a centrifugal compressor.

3. The compressor of claim 1 or 2, wherein the inner wall of the transition duct is secured to a final stator of the first compressor.

4. The compressor of any one of the previous claims, wherein the outer wall of the transition duct is secured to the final stator of the first compressor.

5. The compressor of any one of the previous claims, wherein a casing surrounds the first compressor.

6. The compressor of claim 5, wherein an extension portion of the casing forms at least a portion of the outer wall of the static transition duct.

7. The compressor of any one of the previous claims, further including a knife seal, wherein the knife seal prevents bleeding of air from the transition duct toward the final stator.

8. The compressor of any one of the previous claims, wherein the space defined by the inner wall and the outer wall of the static transition duct is free of support structures.

9. The compressor of any one of the previous claims, wherein the second compressor includes a mixed flow compressor.

10. The compressor of any one of the previous claims, in combination with a combustor and a turbine.

11. The compressor of any one of the previous claims, wherein the transition duct is a static transition duct that fluidically couples the first compressor and the second compressor.

12. An engine comprising the compressor according to any one of the previous claims.

13. The engine of claim 12, wherein the axial compressor and the centrifugal compressor rotate at the same speed.
